# FASCICULE DE BREVET EUROPEEN

(11) **EP 3 542 085 B1**
(45) Date de publication et mention de la délivrance du brevet: **04.11.2020**
(21) Numéro de dépôt: 17804497.0
(22) Date de dépôt: 15.11.2017
(51) Int. Cl.: F16H 55/36

(54) **POULIE DE DÉCOUPLAGE**
ENTKOPPLUNG EINER RIEMENSCHEIBE
UNCOUPLING PULLEY

(30) Priorité: 15.11.2016 FR 1661047
(43) Date de publication de la demande: 25.09.2019
(73) Titulaire: Hutchinson, 75008 Paris (FR)
(72) Inventeur: VARIN, Hervé, 37300 Joue Les Tours (FR)
(74) Mandataire: Gevers & Orès
(86) Numéro de dépôt international: PCT/EP2017/079357
(87) Numéro de publication internationale: WO 2018/091550

(56) Documents cités:
- EP-A1- 2 383 490
- WO-A1-98/50709
- WO-A1-2014/048285
- DE-B3-102015 205 612

## Description

L'invention concerne le domaine des poulies de découplage, comme révélé dans DE102015205612B et correspondant au préambule de la revendication 1.

Une poulie de découplage est par exemple proposée dans le document EP 2 383 490 (D1).

La poulie du document D1 comporte une jante solidaire d'un premier élément de transmission de puissance (une courroie reliée à un moteur par exemple), une cloche solidaire d'un deuxième élément de transmission de puissance (un arbre d'un alternateur par exemple), notamment à travers un moyeu, l'un des éléments de transmission de puissance étant menant et l'autre étant mené, ainsi qu'un ressort de torsion centré à l'intérieur de la cloche.

La jante comporte une butée d'entraînement destinée à coopérer avec le ressort de torsion dans un premier sens de rotation relatif entre la jante et la cloche.

La cloche comporte une première butée de cloche servant à limiter l'angle de rotation (α₁) entre la jante et la cloche dans le premier sens de rotation relatif entre la jante et la cloche. Cette cloche comporte également une deuxième butée de cloche servant à limiter l'angle de rotation (α₄) entre la jante et la cloche dans un deuxième sens de rotation relatif entre la jante et la cloche, ce deuxième sens de rotation étant opposé au premier sens de rotation relatif entre la jante et la cloche.

Plus précisément, le ressort de torsion comprend une première extrémité et une deuxième extrémité agencées de sorte que, dans le premier sens de rotation relatif, la première extrémité du ressort de torsion coopère avec la cloche et la deuxième extrémité du ressort de torsion coopère avec la butée d'entrainement de la jante pour fermer le ressort sur la cloche jusqu'à ce que la deuxième extrémité du ressort de torsion vienne en butée contre la première butée de cloche. La position angulaire de la butée de cloche défini alors un angle de débattement maximal (α₁) de la première extrémité du ressort dans ce premier sens relatif de rotation entre la jante et la cloche.

Cette situation est par exemple rencontrée lorsque la jante, menante, par exemple du fait que la courroie est reliée à un moteur en phase de démarrage entraîne la cloche, menée, par la fermeture du ressort de torsion et puis la mise en butée.

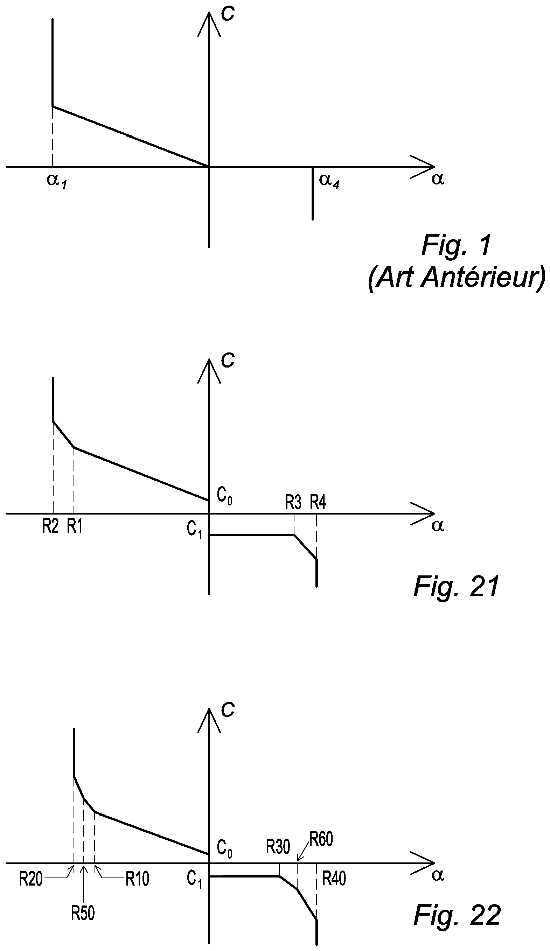

C'est ce qu'on observe sur la figure 1.

La figure 1 représente le principe de fonctionnement d'une poulie telle que décrite dans le document D1. Plus précisément, elle représente l'évolution du couple transmis entre la jante et la cloche en fonction de l'évolution de l'angle entre la jante et la cloche. L'origine sur l'angle correspond à une position limite entre une sollicitation du ressort de torsion et une absence de sollicitation du ressort de torsion.

Dans la partie où l'angle est négatif, le couple augmente au fur et à mesure que le ressort de torsion se ferme dans la cloche, permettant ainsi le passage de couple entre la jante et la cloche et donc entre les deux éléments de transmission de puissance. Une fois l'angle de débattement maximal (α₁) atteint, la mise en butée assure alors un passage de couple très élevé.

En phase de décélération, et à partir de la position en butée correspondant à l'angle de débattement maximal (α₁), la jante et la cloche tournent alors dans le deuxième sens de rotation relatif, le ressort de torsion se détend dans la cloche jusqu'à atteindre sa position neutre. A partir de cette position neutre, le couple entre la jante est la cloche est nul (aux frottements résiduels près). En fonction de son niveau de décélération, la jante peut alors continuer son parcours (mode roue libre), relativement à la cloche, jusqu'à ce que la butée d'entraînement de la jante ou éventuellement une autre butée de la jante, vienne au contact de la deuxième butée de cloche.

On atteint alors un autre angle de débattement maximal (α₄).

C'est ce qui est représenté sur la partie droite de la figure 1 où on observe la zone de couple constant et l'effet de la mise en butée au niveau de cet autre angle de débattement maximal (α₄).

Le dispositif proposé dans le document D1 fonctionne parfaitement.

Cependant, l'accélération de la jante par rapport à la cloche peut être importante. La mise en butée au niveau de l'angle de débattement maximal (α₁) génère alors des chocs répétés qui peuvent avoir une incidence sur la durée de vie de la poulie. Une situation similaire peut être rencontrée pour l'autre angle de débattement maximal (α₄). C'est notamment le cas pour certains véhicules automobiles pour lesquels, en phase de démarrage du moteur, les accélérations et décélérations liées aux premiers cycles de combustion du moteur sont très élevées.

Ces chocs répétés peuvent par ailleurs engendrer un desserrage de la poulie sur l'élément de transmission de puissance, par exemple sur l'alternateur.

Un objectif de l'invention est de proposer une poulie de découplage ne présentant pas au moins l'un des inconvénients précités.

A cet effet, l'invention propose une poulie de découplage munie d'un axe longitudinal, ladite poulie comportant les caractéristiques de la revendication 1.

La poulie selon l'invention pourra également présenter l'une au moins des caractéristiques suivantes, prise seule ou en combinaison :
- au moins une fente de ladite pluralité de fentes présente une largeur, mesurée sur une circonférence de ladite au moins une jupe cylindrique, strictement inférieure à une largeur d'au moins une partie de la jupe cylindrique ;
- au moins fente de ladite pluralité de fentes présente une largeur, mesurée sur la circonférence de ladite au moins une jupe cylindrique, supérieure ou égale à une largeur d'au moins une partie de la jupe cylindrique ;
- la couronne est réalisée en un matériau choisi parmi les plastiques tels que les polyamide, polyester, polyoxyméthylène, polyétheréthercétone, polysulfure de phénylène ou des alliages de ceux-ci ou les thermoplastiques élastomères ;
- la deuxième partie de la couronne se présente sous la forme de deux jupes cylindriques concentriques, l'élément élastiquement déformable étant situé entre les deux jupes cylindriques ;
- les moyens pour assurer, dans un premier sens de rotation relatif entre la jante et le moyeu, l'entraînement de la couronne par la jante comportent au moins une butée située sur la périphérie interne de la jante, au niveau de la deuxième zone et au moins une butée située sur la périphérie externe de la couronne, au niveau de la première partie ;
- - la périphérie interne de la jante comprend au moins une deuxième butée et la périphérie externe de la couronne comporte au moins une deuxième butée ;
- les moyens pour assurer, dans un premier sens de rotation relatif entre la jante et le moyeu, l'entraînement de la couronne par la jante comportent un embrayage unidirectionnel, par exemple un ressort de torsion, dont une extrémité est fixée à la couronne et dont la partie restante est montée à la fois sous la deuxième zone de la jante et autour de la couronne ;
- les moyens pour assurer, dans un premier sens de rotation relatif entre la jante et le moyeu, l'entraînement de la couronne par la jante comportent une roue libre unidirectionnelle montée d'une part, à force avec la deuxième zone de la jante et d'autre part, autour de la première partie de la couronne ;
- la poulie comporte au moins un palier situé entre la jante et le moyeu ;
- ledit au moins un palier comporte une face s'étendant radialement et en contact avec le moyeu ;
- ledit au moins un palier est réalisé soit en un matériau plastique choisi parmi le polyétheréthercétone, le poly(téréphtalate d'éthylène), le polyamide chargé en disulfure de molybdène (MoS₂), le polyamide chargé en polytétrafluoroéthylène ou le polyoxyméthylène soit avec une couche interne métallique ou en alliage métallique, recouverte par une couche externe chargée de polytétrafluoroéthylène ;
- la poulie prévoit un capot monté fixement sur la jante et de préférence, au contact de la couronne.

L'invention sera mieux comprise et d'autres buts, avantages et caractéristiques de celle-ci apparaîtront plus clairement à la lecture de la description qui suit et qui est faite au regard des figures annexées suivantes :
- les figures 2 à 10 représentent un premier mode de réalisation d'une poulie de découplage conforme à l'invention, selon différentes variantes ;
- les figures 11 à 18 représentent un deuxième mode de réalisation d'une poulie de découplage conforme à l'invention, selon différentes variantes ;
- les figures 19 et 20 représentent un troisième mode de réalisation d'une poulie de découplage conforme à l'invention ;
- Les figures 21 et 22 représentent des schémas fonctionnels du premier mode de réalisation de l'invention, selon différentes variantes ;
- Les figures 23 et 24 représentent des schémas fonctionnels du deuxième mode de réalisation de l'invention, selon différentes variantes.

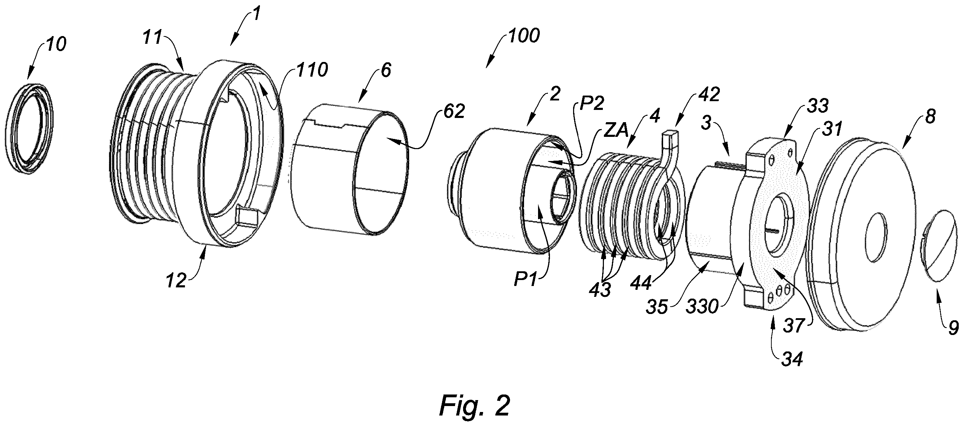

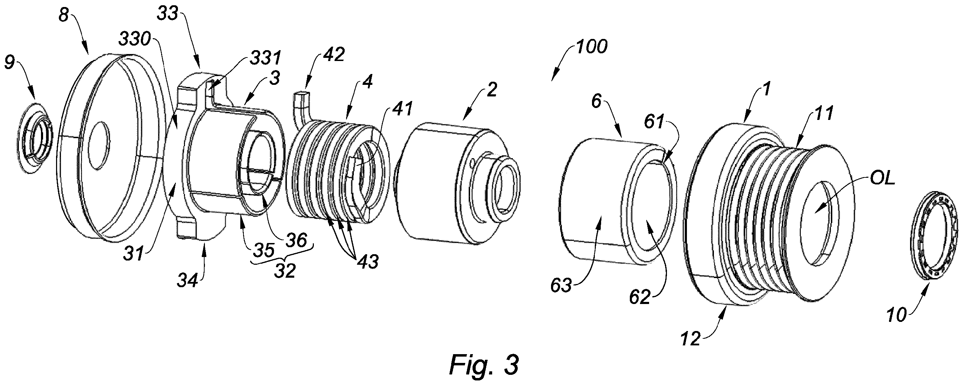

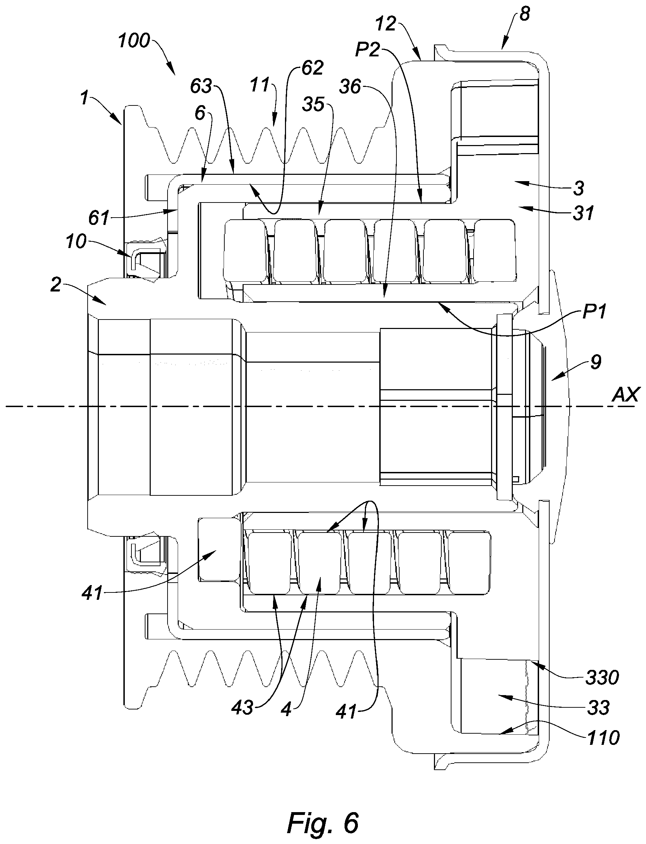

Un premier mode de réalisation de l'invention est décrit à l'appui des figures 2 à 10.

La poulie 100 de découplage selon l'invention comporte une jante 1 solidaire d'un premier élément de transmission de puissance (non représenté, par exemple une courroie reliée à un arbre d'un moteur de véhicule, menant). La jante 1 est munie d'une première zone 11, externe, destinée à recevoir une courroie, en l'occurrence une courroie de type poly V® permettant de faire le lien avec le premier élément de transmission de puissance et une deuxième zone 12 située dans le prolongement axial, à savoir selon la direction définie par l'axe longitudinal AX de la poulie, de la première zone 11.

La jante 1 est également munie d'au moins une butée 13, 14 située sur la périphérie interne de la jante 1, au niveau de la deuxième zone 12. Une telle butée 13, 14 est également nommée butée interne. Avantageusement, et comme représenté sur les figures 2 à 10, la jante est munie d'au moins deux butées 13, 14 situées sur la périphérie interne 110 de la jante 1, toujours au niveau de la deuxième zone 12 de la jante 1.

La poulie 100 comporte également un moyeu 2 solidaire d'un deuxième élément de transmission de puissance (par exemple un arbre d'un alternateur, mené).

L'un des éléments de transmission de puissance est menant et l'autre est mené.

La poulie 100 comporte également une couronne 3, 30.

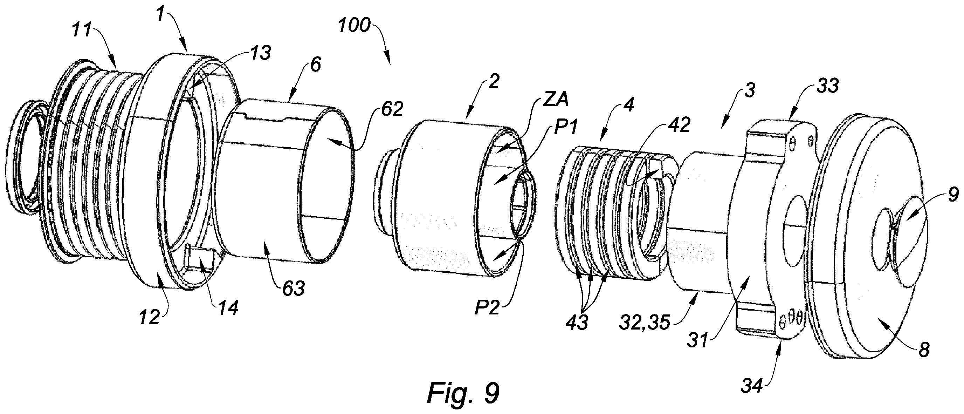

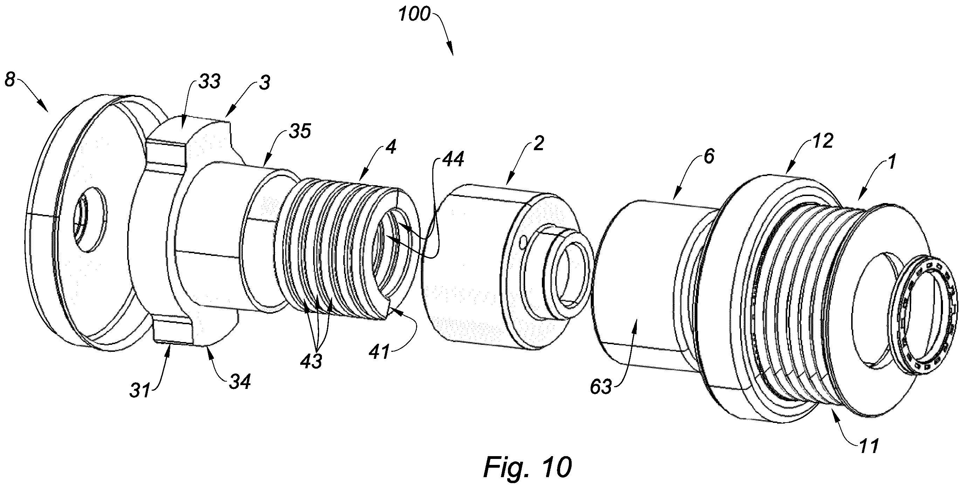

La couronne 3, 30 comprend une première partie 31 située sous la deuxième zone 12 de la jante et une deuxième partie 32 se présentant sous la forme d'au moins une jupe cylindrique 35, 36 s'étendant, à partir de la première partie 31, selon ledit axe longitudinal AX. Plus précisément, sur les figures 2 à 8, la deuxième partie 32 se présente sous la forme de deux jupes cylindriques 35, 36 concentriques. En revanche, sur les figures 9 et 10, qui représentent une variante de réalisation de la poulie 100 illustrée sur les figures précédentes, une seule jupe cylindrique 35 est prévue.

Il convient de noter que la première partie 31 de la couronne est plus rigide que la deuxième partie 32 de cette couronne. Ceci est lié à la géométrie de chacune des deux parties 31, 32, comme cela ressort des figures annexées, et en particulier au fait que la deuxième partie 32 comporte une extrémité libre, située à l'opposée de sa zone d'ancrage à la première partie 31.

La couronne 3, 30 comprend également au moins une butée 33, 34 située sur la périphérie externe 330 de la couronne 3, au niveau de la première partie 31. Une telle butée 33, 34 est également nommée butée externe. Avantageusement, et comme représenté sur les figures 2 à 10, la couronne 3 est munie d'au moins deux butées 33, 34 situées sur la périphérie externe 330 de la couronne, toujours au niveau de la première partie 31 de la couronne 3.

La poulie 100 est également munie d'un élément 4 élastiquement déformable, en l'occurrence et à titre d'exemple un ressort de torsion 4, fixé à la fois au moyeu 2 par une première extrémité 41 et à la couronne 3 par une deuxième extrémité 42.

Le ressort 4 de torsion est centré à l'intérieur du moyeu 2. A cet effet, le moyeu 2, comme tout moyeu classiquement envisagé pour les poulies de découplage comporte une zone annulaire ZA permettant d'y centrer le ressort 4 de torsion, cette zone annulaire ZA étant délimitée par deux parois, à savoir la paroi P1, radialement interne, et la paroi P2, radialement externe, du moyeu 2.

Par ailleurs, la ou chaque jupe cylindrique 35, 36 de la couronne 3 est insérée entre le ressort 4 de torsion et le moyeu 2. En particulier, lorsque deux jupes cylindriques 35, 36 sont prévues, le ressort 4 de torsion est avantageusement logé entre les deux jupes cylindriques 35, 36, ces dernières étant elles-mêmes logées entre les deux parois P1 et P2 du moyeu 2.

Lorsque deux jupes cylindriques 35, 36 sont prévues, la fixation du ressort 4 de torsion au moyeu 2 et à la couronne 3, 30 peut s'effectuer par un encastrement ou par des formes de retenue, prévues dans le moyeu 2 et dans la couronne 3, 30. Sur les figures 2 à 8, l'extrémité 42 du ressort 4 de torsion est montée par encastrement dans un logement 331 de la couronne prévu à cet effet, pour pouvoir loger une extrémité 42 de forme recourbée, c'est-à-dire s'étendant radialement. Sur les figures 9 et 10, l'extrémité 42 du ressort de torsion n'est pas recourbée et vient donc en contact avec une forme de retenue (non visible sur les figues 9 et 10) de la couronne 3.

Lorsque deux jupes cylindriques 35, 36 sont prévues, le ressort 4 de torsion est situé entre les deux jupes cylindriques 35, 36.

La ou chaque jupe cylindrique 35, 36 est située en vis-à-vis de l'élément élastiquement déformable 4.

La couronne 3 est centrée sur le moyeu 2. La couronne 3, 30 est par ailleurs apte à tourner par rapport au moyeu 2 autour de l'axe longitudinal AX de la poulie 100. Le ressort 4 de torsion fournit un lien élastique entre le moyeu 2 et la couronne 3.

La couronne 3 est également montée sous la jante 1 et plus particulièrement, la première partie 31 de la couronne 3, 30 est située sous la deuxième zone 12 de la jante de sorte que la couronne 3 est apte à tourner par rapport à la jante 1 autour dudit axe longitudinal AX de la poulie 100. Ceci peut être réalisé aisément en prévoyant un jeu entre la périphérie externe 330 de la couronne 3, 30 et la périphérie interne 110 de la jante 1.

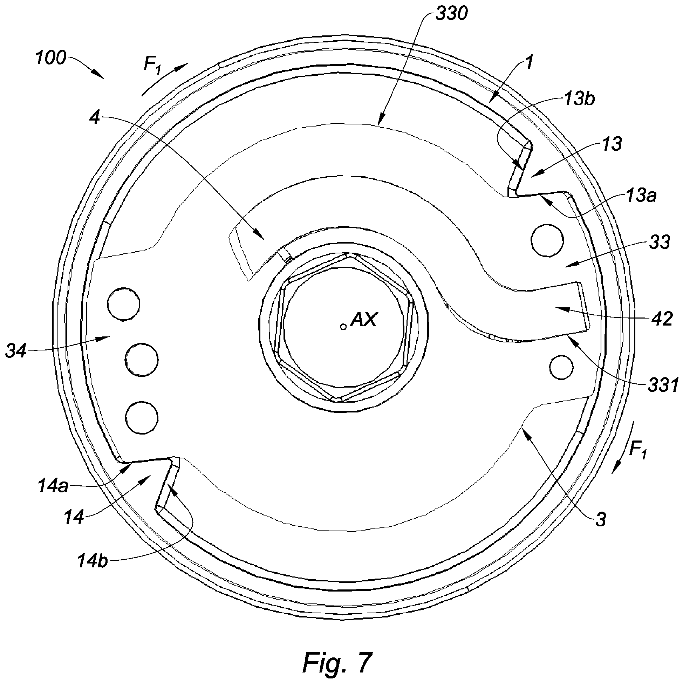

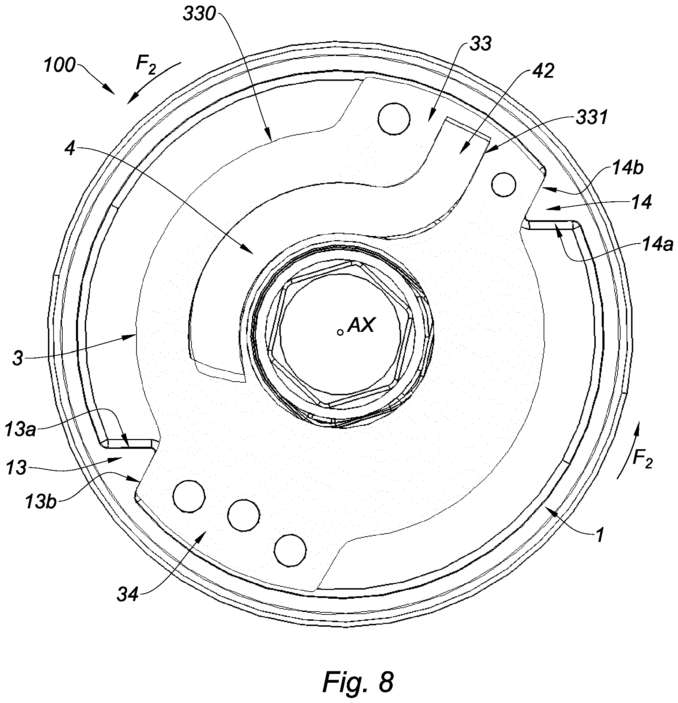

Des moyens sont cependant prévus pour assurer l'entraînement de la couronne 3, 30 par la jante 1. Il s'agit d'un lien mécanique formé par ladite au moins une butée interne 13, 14 de la jante 1 et ladite au moins une butée externe 33, 34 de la couronne 3, 30. L'entraînement de la couronne 3, 30 par la jante 1 peut en effet être assuré par le biais de ces butées. En fonctionnement, cet entraînement n'est pas toujours mis en œuvre, selon les sollicitations subies par l'élément menant. Cela sera expliqué de façon plus détaillée par la suite, en particulier à l'appui des figures 7 et 8.

La poulie 100 comporte également au moins un palier 6 situé entre la jante 1 et le moyeu 2.

Le palier 6 permet d'assurer la rotation relative de la jante 1 par rapport au moyeu 2. A cet effet, le palier 6 est avantageusement réalisé en un matériau plastique choisi parmi le polyétheréthercétone (PEEK), le poly(téréphtalate d'éthylène) (PET), le polyamide (PA) chargé en disulfure de molybdène (MoS₂), le polyamide (PA) chargé en polytétrafluoroéthylène (PTFE) ou le polyoxyméthylène (POM). En variante, le palier 6 est réalisé avec une couche métallique ou en alliage métallique, recouverte par une couche chargée de polytétrafluoroéthylène (PTFE). Ces matériaux permettent d'avoir un coefficient de frottement faible.

Le palier 6 comporte une face 62, radialement interne, s'étendant longitudinalement (selon l'axe AX) et au contact du moyeu 2 ainsi qu'une face 63, radialement externe, s'étendant longitudinalement et au contact de la jante 1. Avantageusement, le palier 6 comporte également une face 61 s'étendant radialement, à savoir sensiblement perpendiculairement aux faces 62 et 63, et en contact avec le moyeu 2. Cette face 61 facilite le montage et la tenue en place du palier 6.

La poulie 100 comprend un capot 8. Le capot 8 est destiné à recouvrir la jante 1, du côté opposé à la zone 11 de réception de la courroie. Avantageusement, le capot 8 est monté au contact de la couronne 3, 30 et plus précisément de la face latérale 37 de la couronne 3, 30 qui fait face au capot 8.

Le capot 8 est associé à un bouchon d'étanchéité 9.

La poulie 100 comprend enfin un joint d'étanchéité 10 venant dans une ouverture latérale OL de la jante 1, du côté opposé au bouchon d'étanchéité 9, pour assurer une étanchéité.

En ce qui concerne la couronne, plusieurs variantes de conception peuvent être envisagées.

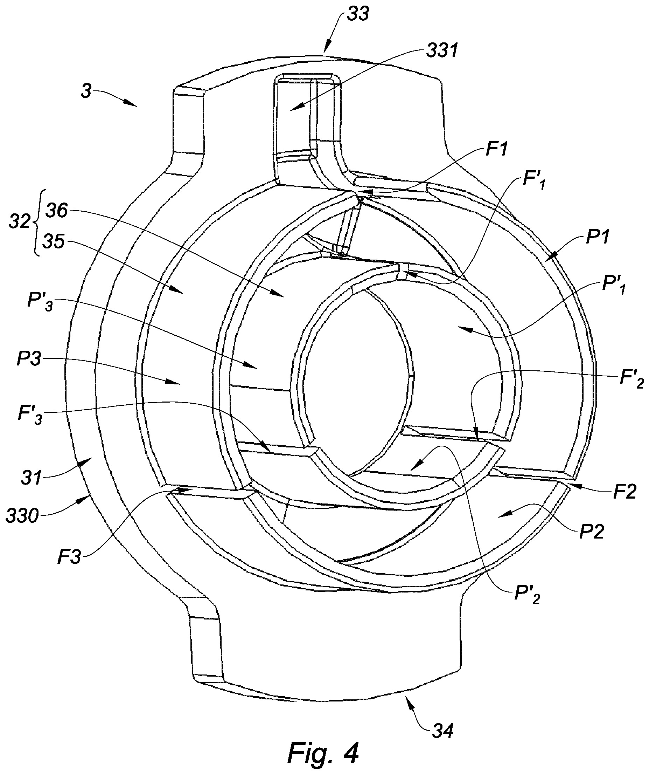

Ainsi, sur la figure 4, on a représenté une couronne 3 dont ladite au moins une jupe cylindrique 35, 36 de la couronne 3 est élastique. En l'occurrence, les deux jupes 35, 36 concentriques sont élastiques. On comprend alors que la première partie 31 de la couronne est alors bien plus rigide que la deuxième partie 32 de cette couronne, du fait que la deuxième partie 32 (jupe cylindrique) est alors rendue élastiquement déformable.

Pour obtenir cette élasticité, plusieurs possibilités sont envisageables. Sur la figure 4, ladite au moins une jupe cylindrique 35, 36 de la couronne 3, en l'occurrence chaque jupe cylindrique 35, 36, comprend une pluralité de fentes F1, F2, F3, respectivement F'1, F'2, F'3 longitudinales et en conséquence une pluralité de parties P1, P2, P3, P'1, P'2, P'3 séparées les unes des autres par l'une des fentes. La fente F1 est nécessaire pour laisser un passage pour l'extrémité 42 du ressort 4 de torsion vers le logement 331. Toutefois, cette fente F1 permet également, en combinaison avec les autres fentes à procurer une l'élasticité souhaitée pour la ou chaque jupe cylindrique 35, 36. La couronne 3 de la figure 4 est également celle qui est représentée sur les figures 2, 3 et 6 à 8.

Cependant, la présence d'au moins une jupe cylindrique 35, 36 élastique n'est pas nécessaire dans le cadre de l'invention.

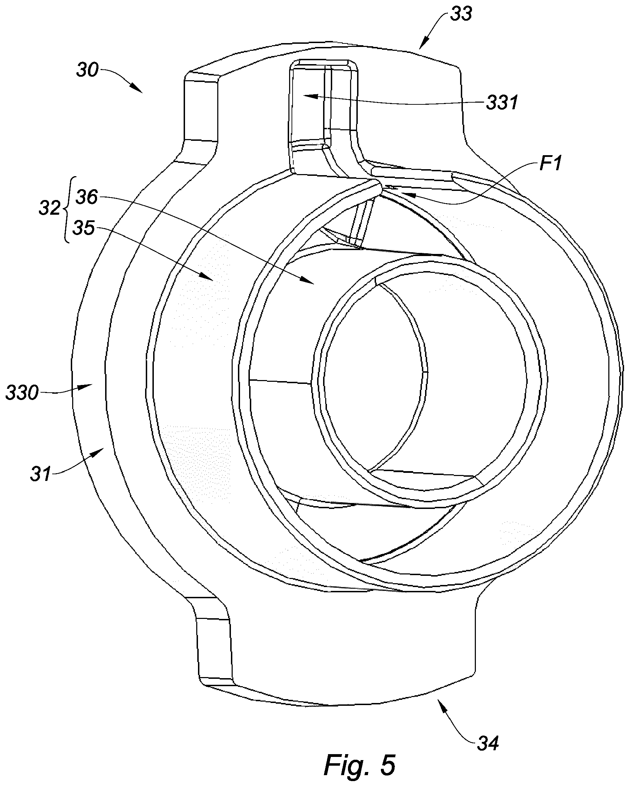

On peut donc prévoir au moins une jupe cylindrique 35, 36 de couronne 30 ne présentant pas d'élasticité. C'est ce qui est représenté sur la figure 5. Sur cette figure 5, il n'y a pas de fentes, à l'exception de la fente F1, pour laisser passer l'extrémité 42 recourbée du ressort 4 de torsion vers le logement 331.

Bien entendu, dans le cas où l'extrémité 42 du ressort de torsion n'est pas recourbée, une telle fente F1 n'est pas nécessaire lorsque qu'une couronne 30 non élastique est envisagée. C'est ce qui peut être observé sur les figures 9 et 10. Pour autant, on peut tout à fait prévoir, dans le cas de la variante des figures 9 et 10, une couronne dont la jupe cylindrique est conforme à la jupe cylindrique 35 de la couronne 3 représentée sur la figure 4 et dans ce cas, chaque fente F1, F2, F3 n'intervient que pour procurer un comportement élastique à la jupe concernée. On peut même prévoir, dans une autre variante, une couronne identique à celle de la couronne 3 de la figure 4.

Nous allons maintenant décrire le fonctionnement de la poulie 100, dans le cas d'un fonctionnement de l'élément 4 élastiquement déformable en fermeture (figures 2 à 8, présence d'un extrémité recourbée pour l'élément 4 déformable élastiquement), d'une part pour une couronne 3 à jupe cylindrique non élastique à l'appui de la figure 21 et d'autre part, pour une couronne 3 à jupe cylindrique non élastique.

Aux fins de l'explication, nous décrivons le cas où la jante 1 est menante et le moyeu 2 est mené.

La figure 21 (cas d'une jupe cylindrique non élastique) représente l'évolution du couple transmis entre la jante 1 et le moyeu 2, en fonction de l'angle formé entre la jante 1 et le moyeu 2. L'origine sur l'angle (angle nul) correspond à une position limite entre une sollicitation de l'élément 4 élastiquement déformable et une absence de sollicitation de ce même élément 4 (au moins sur une certaine gamme de valeurs, comme cela est expliqué par la suite).

A partir de la position d'angle nul, la jante 1 est mise en rotation dans le sens horaire (convention arbitraire sur la figure 7, mode couplage). Cela peut correspondre à une situation d'accélération, par exemple lors du démarrage d'un moteur.

Une butée interne 13, 14 de la jante 1 est alors mise en contact, par sa face 13, 14a, avec une butée externe 33, 34 de la couronne 3, 30. La jante 1 entraîne alors la couronne 3, 30 en rotation dans le sens horaire. Du fait que l'élément 4 élastiquement déformable, en l'occurrence un ressort de torsion est fixé à la fois à la couronne 3, 30 et aussi, au moyeu 2, la couronne 3 entraîne alors le moyeu 2 par l'intermédiaire de l'élément 4 élastiquement déformable, également dans le sens horaire. Sur la figure 21, cela se traduit par une montée de couple, dans la zone à angle négatif comprise entre l'angle nul et le l'angle R1. Le couple passe alors de la valeur nulle à la valeur C₀ (à angle nul), qui correspond au couple de frottement entre le moyeu 2 et le palier 6. Puis, il augmente linéairement au fur et à mesure que l'élément 4 élastiquement déformable est sollicité.

Si la déformation de l'élément 4 élastiquement déformable est suffisamment importante, celui-ci va alors venir au contact de l'une des jupes cylindriques 35, 36, en l'occurrence de la jupe cylindrique de plus petit diamètre, à savoir la jupe cylindrique 36 (puisque dans cet exemple, l'élément 4 élastiquement déformable travaille en fermeture : figures 2 à 8 avec présence d'une extrémité 42 recourbée). Ce contact est défini par l'angle R1 sur la figure 21.

Au-delà de l'angle R1, le couple augmente plus rapidement qu'en deçà de l'angle R1, car le contact entre l'élément 4 élastiquement déformable et la jupe cylindrique 36 apporte un couple supplémentaire.

On est dans ce fonctionnement jusqu'au point R2. Entre les points R1 et R2, la zone de contact entre l'élément élastiquement déformable et la jupe cylindrique 36 ne fait qu'augmenter. C'est par exemple le cas lorsque l'élément 4 élastiquement déformable est un ressort de torsion car dans ce cas, de plus en plus de spires du ressort 4 de torsion viennent au contact de la jupe cylindrique 36 au fur et à mesure que l'angle augmente (en valeurs absolues).

Au point R2, l'élément 4 élastiquement déformable ne peut plus se déformer et est complètement bloqué par la jupe cylindrique 36. Par exemple, dans le cas où l'élément 4 élastiquement déformable est un ressort de torsion, cela correspond à une situation où toutes les surfaces internes 44 des spires du ressort sont au contact de la jupe cylindrique 36. A partir du point R2, le couple allant de la jante 1 vers le moyeu 2 passe donc par la première partie 31 de la couronne 3 et par l'ensemble, alors rigide, formé à la fois par l'élément 4 élastiquement déformable et la jupe cylindrique 36. Ce point R2 correspond à la configuration de la poulie 100 représentée sur la figure 7.

Contrairement à la poulie de l'art antérieur (document D1), il n'y a pas de mise en butée franche.

Par ailleurs, par rapport au document D2 (DE102015205612), la mise au contact de l'élément 4 élastiquement déformable avec la jupe cylindrique n'implique pas de mise sous contrainte des moyens pour assurer l'entraînement de la couronne par rapport à la jante.Ceci est lié au fait que la première partie 31 de la couronne est plus rigide que sa deuxième partie 32.On améliore ainsi la durée de vie de la poulie 100.

Si la poulie 100 subit une décélération (arrêt moteur ou phase de décélération pendant le démarrage du moteur par exemple), on parcourt alors la courbe de la figure 21 dans l'autre sens jusqu'à atteindre l'angle nul. Pendant ce retour vers l'angle nul, les butées interne 13, 14 et externe 33, 34 restent en contact sous l'action du couple résistant du moyeu 2 et de l'élément 4 élastiquement déformable qui cherche naturellement à revenir vers sa position d'équilibre.

Si la décélération est suffisamment forte, on va alors se trouver dans la zone d'angles positifs.

Plus précisément, à partir de l'angle nul, les butées internes 13, 14 et externe 33, 34 ne sont plus en contact et la jante 1 réalise un mouvement de rotation relatif par rapport à la couronne 3 qui est anti-horaire (flèche F2 sur la figure 8).

Entre l'angle nul et l'angle R3, le couple est alors constant, du fait de l'absence de sollicitation de l'élément 4 élastiquement déformable. Ce couple n'est cependant pas nul et se compose du frottement de la jante 1 sur le palier 6 auquel vient s'ajouter le frottement entre le capot 8 (fixé à la jante 1) et la face 37 de la couronne 3. Au passage de l'angle nul, le couple passe donc de la valeur C₀ à la valeur C₁ (avec |C₁|> C₀, du fait que le frottement capot/couronne s'ajoute au frottement lié au palier). L'effort de contact entre la couronne 3 et la capot 8 est généré par une précontrainte axiale de l'élément 4 élastiquement déformable. Cette précontrainte peut être modulable en fonction du niveau C₁ souhaité. Il convient de noter que le frottement entre le capot 8 et la face 37 de la couronne 3 permet alors de décélérer plus rapidement le moyeu 2, que si l'on s'appuyait uniquement, entre l'angle nul et l'angle R30 sur le seul frottement palier/moyeu. Ceci est particulièrement intéressant car la survitesse du moyeu 2 par rapport à la jante 1 génère des phénomènes de bruyance que l'on peut ainsi limiter.

Bien entendu, si le capot 8 n'était pas au contact de la couronne 3, alors ce couple C₁ serait égal à C₀. Il n'y aurait pas de contribution du frottement capot /couronne.

A partir de l'angle R3, les butées internes 13, 14 et externe 33, 34 viennent à nouveau en contact, par les faces 13b, 14b des butées internes de la jante 1.

Ce contact va freiner le mouvement anti-horaire de la jante 1, aidé en cela par une mise sous sollicitation de l'élément 4 élastiquement déformable. Cela se traduit par une diminution du couple entre les angles R3 et R4 de la figure 21. En effet, sous l'effet de cette sollicitation, l'élément 4 élastiquement déformable va se déformer, mais en ouverture, jusqu'à entrer en contact avec la jupe cylindrique de plus grand diamètre, à savoir la jupe cylindrique 35. La zone de contact entre l'élément 4 élastiquement déformable augmente entre les angles R3 et R4, augmentant ainsi de plus en plus le couple (effet de freinage).

L'angle R4 correspond à la situation dans laquelle l'élément 4 élastiquement déformable est bloqué par la jupe cylindrique 35. Cela est notamment le cas lorsque l'élément 4 élastiquement déformable est un ressort de torsion, l'angle R4 correspondant alors à une situation dans laquelle toutes les surfaces externes 43 des spires du ressort sont au contact de la jupe cylindrique 35. Au niveau de l'angle R4, l'élément 4 élastiquement déformable et la jupe cylindrique 35 forment un ensemble rigide par lequel le couple passe.

La figure 22 (cas d'une jupe cylindrique élastique) représente l'évolution du couple transmis entre la jante 1 et le moyeu 2, en fonction de l'angle formé entre la jante 1 et le moyeu 2. L'origine sur l'angle (angle nul) correspond à une position limite entre une sollicitation de l'élément 4 élastiquement déformable et une absence de sollicitation de ce même élément 4 (au moins sur une certaine gamme de valeurs, comme cela est expliqué par la suite).

Le fonctionnement décrit précédemment est transposable en partie ici.

En particulier, si l'on compare la figure 22 à la figure 21 :
- l'angle R10 correspond à l'angle R1,
- l'angle R30 correspond à l'angle R3,
- l'angle R20 correspond à l'angle R2, dans la mesure où il s'agit d'une position dans laquelle l'élément élastiquement déformable ne peut plus se déformer, et
- l'angle R40 correspond à l'angle R4, dans la mesure où il s'agit d'une position dans laquelle l'élément élastiquement déformable ne peut plus non se déformer.

Toutefois, le fait que les jupes cylindriques 35, 36 soient élastiques permet, lorsque l'élément 4 élastiquement déformable vient au contact de l'une de ces jupes cylindriques 35, 36, de la déformer.

Ainsi, l'angle R50 correspond à une mise au contact de l'élément 4 élastiquement déformable avec la jupe cylindrique 36 et la zone située entre l'angle R50 et l'angle R20 correspond à la zone de déformation de la jupe cylindrique 36. L'angle R20 correspond alors à une position dans laquelle la jupe cylindrique 36, du fait de sa déformation imprimée par l'action de l'élément 4 élastiquement déformable, vient au contact du moyeu 2, et plus particulièrement dans le cas d'espèce, au contact de la paroi P1 du moyeu 2. Une fois la jupe cylindrique 36 au contact du moyeu 2, aucune déformation supplémentaire de la jupe cylindrique 36, ni d'ailleurs de l'élément élastiquement déformable, n'est alors possible.

Ainsi également, l'angle R60 correspond à une mise au contact de l'élément 4 élastiquement déformable avec la jupe cylindrique 35 et la zone située entre l'angle R60 et l'angle R40 correspond à la zone de déformation de la jupe cylindrique 35. L'angle R40 correspond alors à une position dans laquelle la jupe cylindrique 35, du fait de sa déformation imprimée par l'action de l'élément élastiquement déformable, vient au contact du moyeu 2, et plus particulièrement de la paroi P2 du moyeu 2. Une fois la jupe cylindrique 35 au contact du moyeu 2, aucune déformation supplémentaire de la jupe cylindrique 35 ni d'ailleurs de l'élément 4 élastiquement déformable, n'est alors possible.

Il convient de rappeler que la poulie 100 peut cependant travailler en ouverture en mode couplage, conformément à la variante des figures 9 et 10.

Dans ce cas, le fonctionnement de la poulie 100 est, dans la zone d'angle négatifs, similaire à celui qui a été décrit précédemment à l'appui des figures 21 et 22. Cependant, l'élément 4 élastiquement déformable travaillant en ouverture il viendra au contact de la jupe cylindrique de plus grand diamètre, à savoir la jupe cylindrique 35.

Dans la zone d'angle positifs, on peut aussi prévoir un fonctionnement similaire à celui des figures 21 et 22, si une jupe cylindrique de plus petit diamètre, à savoir la jupe cylindrique 36, est prévue, avec un comportement non élastique (figure 21) ou un comportement élastique (figure 22, présence de fentes par exemple). Et quand cette possibilité est envisagée, il convient alors d'encastrer les extrémités de l'élément 4 élastiquement déformable dans le moyeu 2 et la couronne 3.

Si les jupes cylindriques 35, 36 sont élastiques, elles se déformeront comme expliqué précédemment.

Dans le fonctionnement expliqué ci-dessus (figure 21 ou figure 22, pour lesquelles le mode couplage est effectué en fermeture ou les équivalents pour lesquels le mode couplage est effectué en ouverture), les deux jupes cylindriques 35, 36 sont mises à profit.

La présence des deux jupes cylindriques 35, 36 pour la poulie 100 correspondant au premier mode de réalisation est particulièrement avantageuse car cela permet, en comparaison à l'art antérieur de la figure 1, de s'affranchir des deux butées franches de cet art antérieur.

Cependant, on peut ne prévoir qu'une seule jupe cylindrique 35, 36 si l'on souhaite améliorer, par rapport à l'art antérieur divulgué dans le document D1, que partiellement le fonctionnement. Par exemple, on peut travailler avec un élément 4 élastiquement déformable travaillant en fermeture en mode couplage, avec la jupe cylindrique 36 pour obtenir un effet de freinage ou d'amortissement uniquement du côté des angles négatifs.

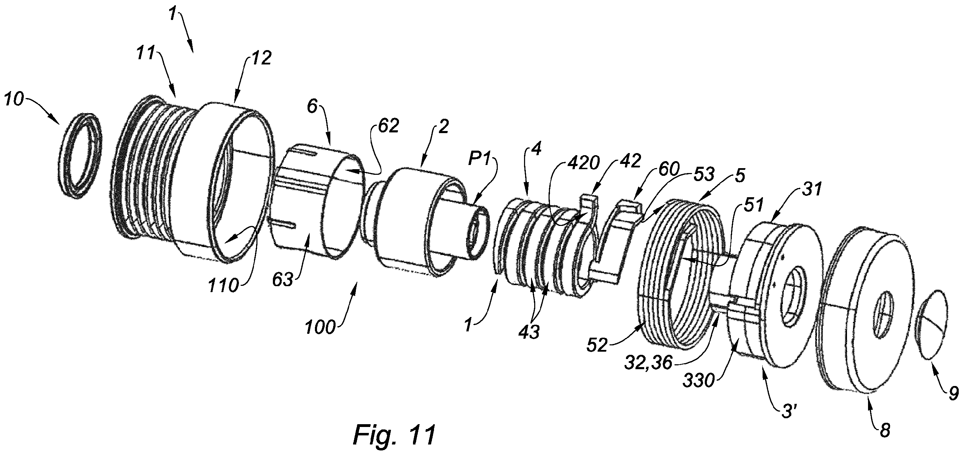

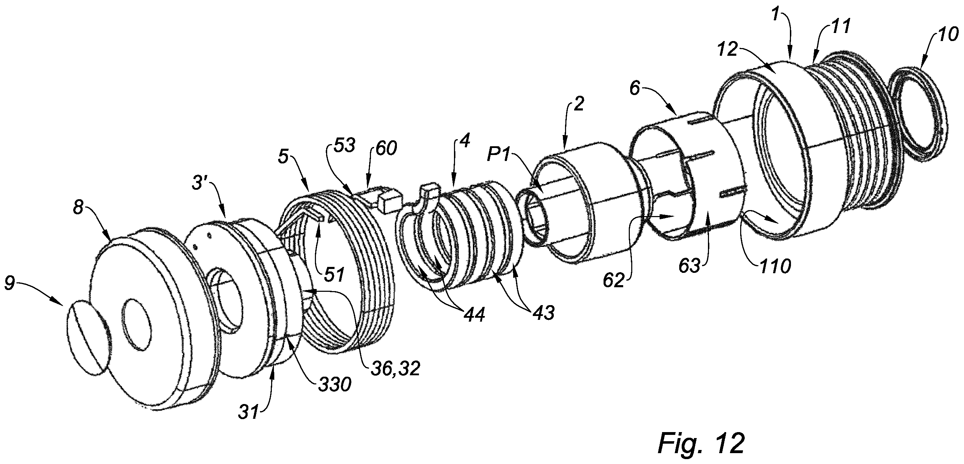

Un deuxième mode de réalisation de l'invention est décrit à l'appui des figures 11 à 18.

Par rapport au premier mode de réalisation, la modification porte sur la façon dont s'effectue l'entraînement entre la jante 1 et la couronne 3', 30', 300'. Ainsi, dans ce deuxième mode de réalisation, la poulie 100' est telle que la jante 1 ne comporte pas de butées internes et la couronne 3', 30', 300' ne comporte pas de butées externes.

Pour cette poulie 100', l'entraînement entre la jante 1 et la couronne 3', 30', 300' s'effectue par l'intermédiaire d'un embrayage unidirectionnel 5.

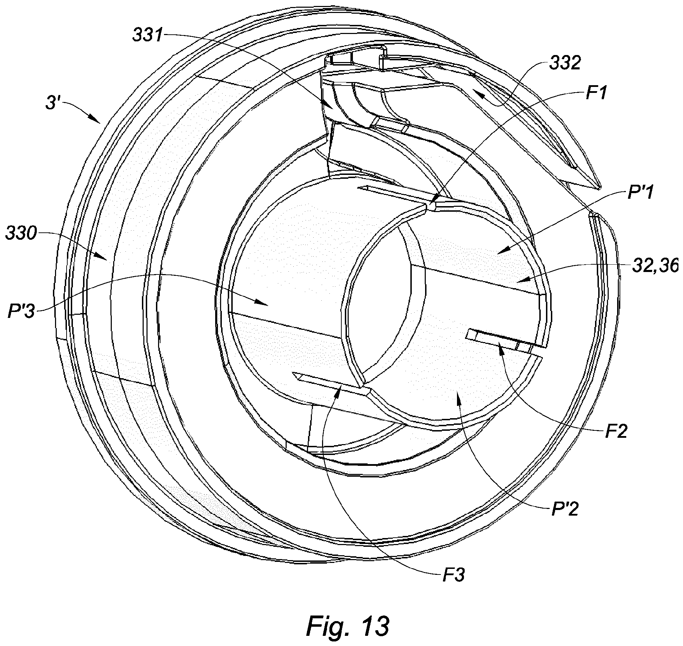

L'embrayage unidirectionnel 5 comprend une extrémité 51 fixée à la couronne 3', 30', 300' par exemple par insertion voire encastrement dans un logement 332 réalisée dans la couronne 3', 30', 300'. La couronne 3', 30', 300' de la poulie 100' est donc légèrement modifiée (figures 13 à 15), par rapport à la couronne 3, 30 de la poulie 100, pour pouvoir s'adapter à la présence de l'embrayage unidirectionnel 5. Il n'en reste pas moins que la première partie 31 de la couronne 3', 30', 300' est plus rigide que la deuxième partie 32 de cette couronne. La partie restante 52 de l'embrayage unidirectionnel 5 est quant à elle montée à la fois sous la deuxième zone 12 de la jante 1 et autour de la couronne 3', 30', 300' à savoir entre la périphérie interne 110 de la deuxième zone 12 de la jante 1 et la périphérie externe 330 de la première partie 31 de la couronne 3', 30', 300'. On note que cette partie 52 présente la forme générale d'un cylindre.

Avantageusement, l'autre extrémité 53 de l'embrayage unidirectionnel 5 est laissée libre et n'est donc fixée ni à la couronne 3', 30', 300', ni à la jante 1. Dans ce cas, l'embrayage unidirectionnel 5 est choisi pour qu'à l'état naturel, le diamètre de cet embrayage unidirectionnel 5 soit plus grand que le diamètre interne de la jante 1, ce qui permet d'assurer une précontrainte de l'embrayage unidirectionnel 5 quand il est inséré entre la jante 1 et la couronne 3', 30', 300'.

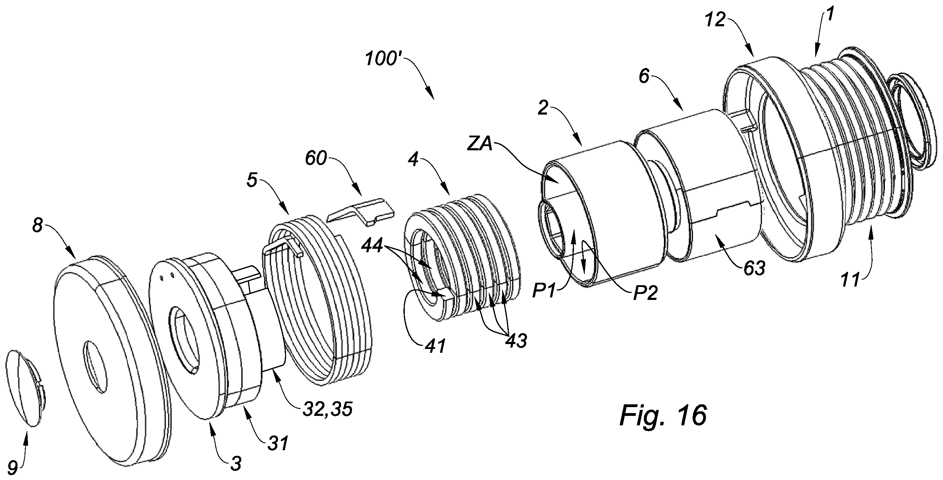

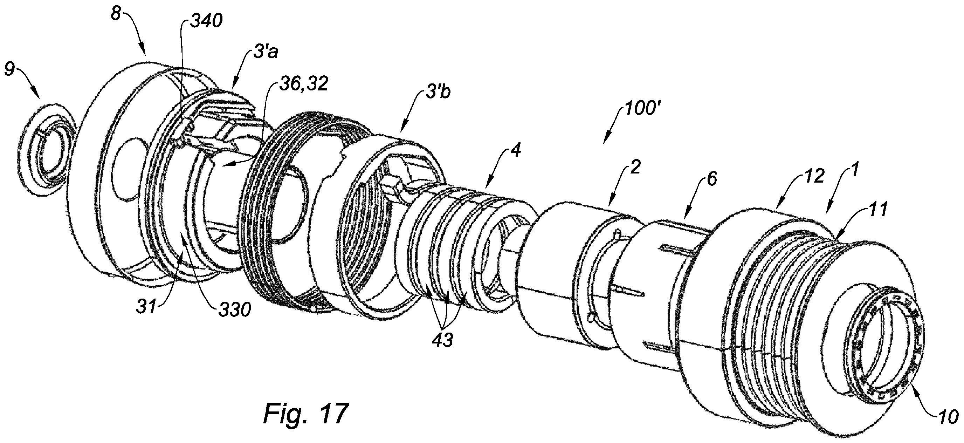

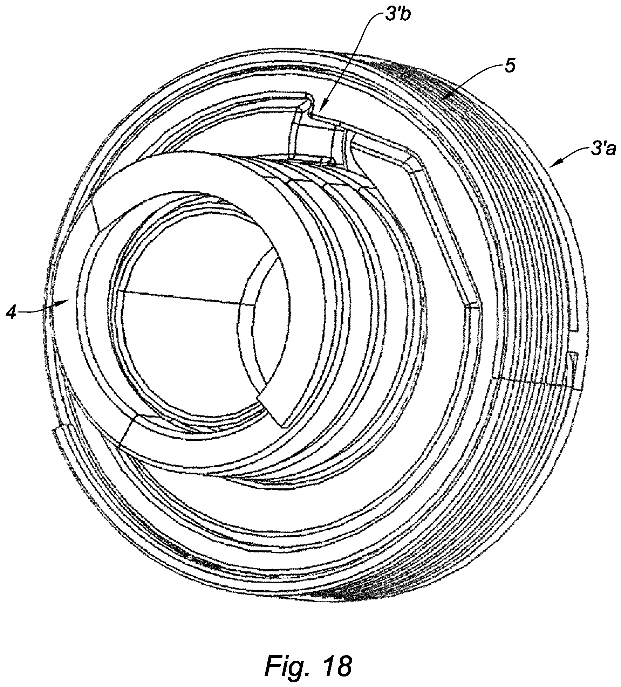

Ce qui précède vaut pour les figues 11 à 15 ainsi que les figures 17 et 18 où l'extrémité 42 du ressort 4 de torsion est recourbée (parallèle à faire avec les figures 2 à 8 du premier mode de réalisation), mais également pour la variante de la figure 16, pour laquelle l'extrémité 42 du ressort de torsion n'est pas recourbée (parallèle à faire avec la variante des figures 9 et 10 du premier mode de réalisation).

Lorsque l'extrémité 42 du ressort 4 de torsion est recourbée (cf. figures 11 à 15 par exemple), l'extrémité 51 de l'embrayage unidirectionnel 5 se présente avantageusement, et comme représenté sur les figures annexées, par un bras. Cette extrémité ou bras 51 est avantageusement au contact de l'extrémité 42 du ressort 4 de torsion, pour apporter une meilleure transmission de couple. Plus précisément, l'extrémité 51 de l'embrayage unidirectionnel est au contact d'une face latérale 420 de l'extrémité recourbée 42 du ressort de torsion 4 (on peut se le représenter avec les figures 11 et 13, par exemple).

Au contraire, lorsque cette extrémité 42 n'est pas recourbée (figure 16), il n'y a pas nécessairement de contact avec l'extrémité 51 de l'embrayage unidirectionnel 5.

Il convient de noter qu'avantageusement, on peut prévoir un coin 60 situé dans le prolongement axial, à savoir selon la direction définie par l'axe longitudinal AX de la poulie 100', de l'extrémité 51 de l'embrayage unidirectionnel 5. Ce coin 60 facilite le maintien du bras 51 en place lors de la transmission de couple. Le coin 60 permet de mieux maintenir le bras 51 dans le logement 332 prévu dans la couronne 3', 30', 300" pour recevoir ce bras 51. En particulier, le coin 60 permet d'éviter le flambage du bras 51 lors du passage de couple.

Il convient de noter que la fonction remplie par le coin 60 peut être obtenue autrement. En effet, et comme cela est représenté sur les figures 17 et 18, on peut envisager de mettre en œuvre une contre-couronne 3'b et une forme complémentaire 340 sur la couronne 3'a elle-même qui vient coopérer avec la contre-couronne 3'b. Cette conception est plus aisée, par rapport à celle impliquant la présence d'un coin 60, pour le montage de la poulie.

On comprend que l'embrayage unidirectionnel 5 est monté en série avec le ressort 4 de torsion, par l'intermédiaire de la couronne 3', 30', 300' qui les maintient en contact.

De manière analogue au premier mode de réalisation, plusieurs conceptions sont envisageables pour la couronne 3', 30', 300'.

La couronne 3' de la figure 13 est à rapprocher de la couronne 3 de la figure 4. Les seules différences entre ces deux couronnes sont, sur la figure 13, la présence du logement 332 pour le bras 51 de l'embrayage unidirectionnel 5 et l'absence de jupe cylindrique 35. En effet, dans la mesure où un embrayage unidirectionnel est utilisé, la jupe cylindrique 35 n'est pas nécessaire, comme cela sera expliqué par la suite à l'appui de la figure 21.

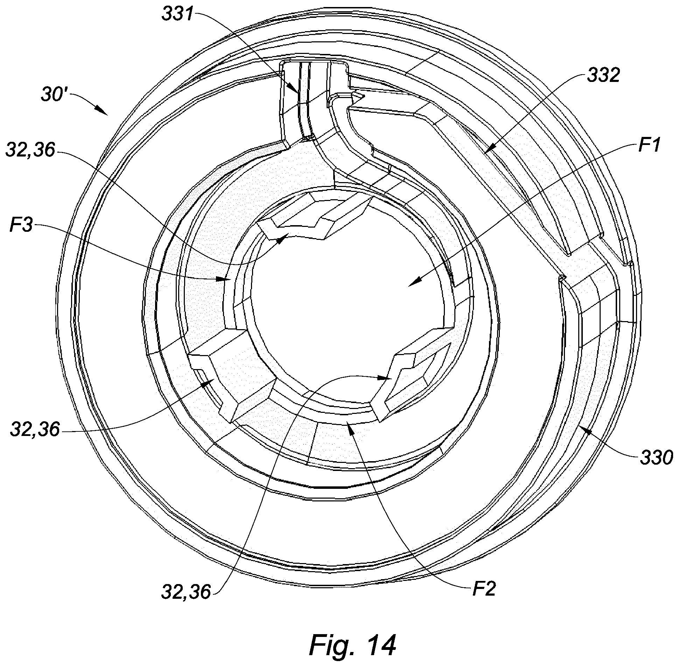

La couronne 30' de la figure 14 se différencie de la couronne 3' de la figure 13 par la forme géométrique de la jupe cylindrique 26. En effet, sur la figure 13, et comme sur la figure 4, la pluralité de fentes F1, F2, F3 présente une largeur, mesurée sur une circonférence de ladite au moins une jupe cylindrique 36, strictement inférieure à une largeur d'au moins une partie P'1, P'2, P'3 de la jupe cylindrique 36. Au contraire, sur la figure 14, la pluralité de fentes présente une largeur, mesurée sur la circonférence de la jupe cylindrique 36, supérieure ou égale à une largeur d'au moins une partie P'1, P'2, P'3 de la jupe cylindrique 36. Sur cette figure 14, la largeur des fentes est telle qu'on peut d'ailleurs voir la jupe cylindrique 36 de la figure 14 comme un négatif de la jupe cylindrique de la figure 13.

Il convient de noter qu'une jupe cylindrique telle que celle qui est proposée sur la figure 14 pourrait également être utilisé dans la poulie 100 du premier mode de réalisation, pour former soit la jupe cylindrique 36, soit la jupe cylindrique 35, soit les deux jupes cylindriques 35, 36.

Les autres composants de la poulie 100' selon le deuxième mode de réalisation ne sont pas décrits de façon plus détaillée, dans la mesure où ils sont identiques à ceux du premier mode de réalisation. Cela concerne notamment le capot 8 et le palier 6 et aussi le fait que la ou selon le cas chaque jupe cylindrique 35, 36 est située en vis-à-vis de l'élément élastiquement déformable 4.

Les couronnes 3', 30' sont toutes les deux des couronnes à jupe cylindrique 36 élastique.

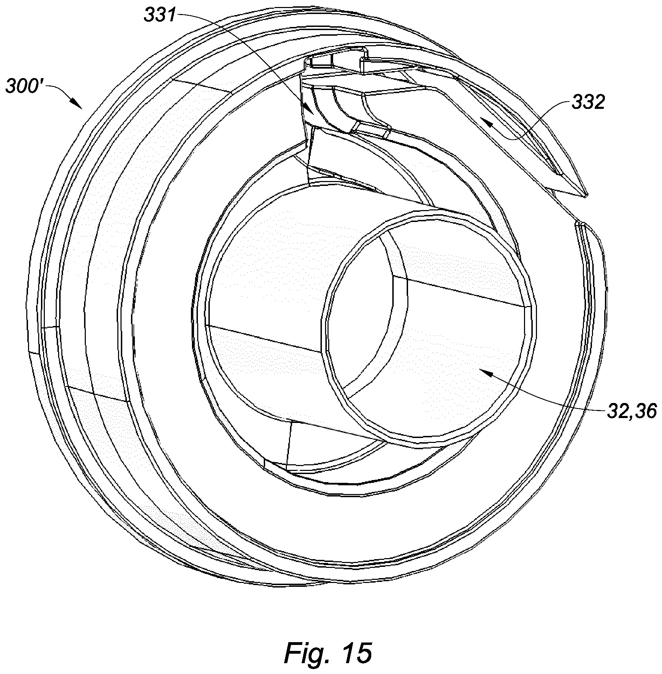

Enfin, sur la figure 15, on a représenté une variante dans laquelle la couronne 300' est une couronne dont la jupe cylindrique 36 n'est pas élastique. Cette conception est à rapprocher de celle de la figure 5, avec toutefois la présence d'un logement 332 pour le bras 51 de l'embrayage unidirectionnel 5 et l'absence de jupe cylindrique de plus grand diamètre, à savoir de la jupe cylindrique 35.

Il faut bien voir que, même si la présence d'une jupe cylindrique 35 de plus grand diamètre n'est pas obligatoire dans la poulie 100', celle-ci peut être prévue bien qu'elle ne présente pas d'intérêt direct dans le fonctionnement de la poulie 100'. Elle permet néanmoins d'assurer un centrage de la couronne 3 dans le moyeu 2.

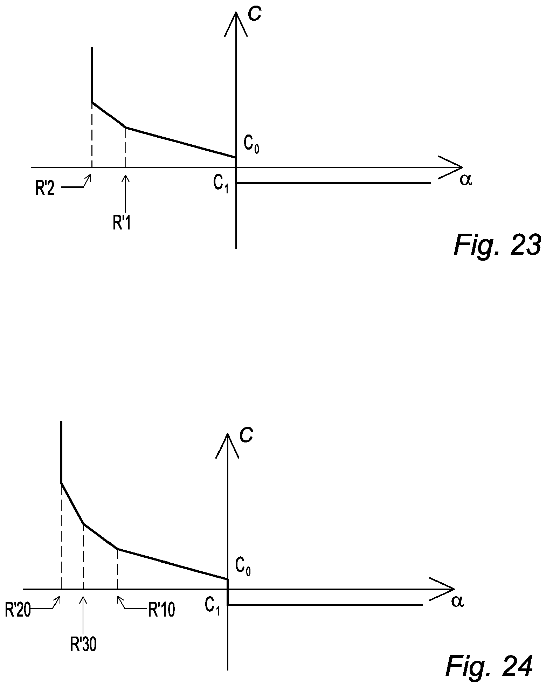

La figure 23 (cas d'une jupe cylindrique 26 non élastique, à savoir notamment selon la figure 15) représente l'évolution du couple transmis entre la jante 1 et le moyeu 2, en fonction de l'angle formé entre la jante 1 et le moyeu 2. L'origine sur l'angle (angle nul) correspond à une position limite entre une sollicitation de l'élément 4 élastiquement déformable et une absence de sollicitation de ce même élément 4.

On considère toujours le cas où la jante 1 est menante et le moyeu 2 est mené. Lors d'une mise en rotation de la jante (sens horaire par convention, lié par exemple à une accélération), l'embrayage unidirectionnel 5 est sollicité et permet alors l'entraînement de la couronne 300' par la jante 1 et par suite du moyeu 2 par l'intermédiaire de l'élément 4 élastiquement déformable. Le couple transmis au moyen augmente alors. Ceci correspond, sur la figure 23, aux angles négatifs compris entre l'angle nul et l'angle R'1.

A l'angle R'1, l'élément 4 élastiquement déformable vient au contact de la jupe cylindrique 36.

Au-delà de l'angle R'1, un couple supplémentaire vient s'ajouter du fait de ce contact jusqu'à atteindre l'angle R'2 pour lequel l'élément 4 élastiquement déformable ne peut plus se déformer.

Si la jante 1 décélère, on parcourt la courbe de la figure 23 depuis l'angle R'2 vers l'angle nul, à partir duquel l'embrayage unidirectionnel 5 n'est plus sollicité.

Si la décélération est suffisamment importante, on passe sur la figure 23 dans le domaine des angles positifs où le couple est constant. En effet, dans cette zone, l'embrayage unidirectionnel n'est plus sollicité et il existe donc un mouvement relatif entre la couronne 300' et la jante 1 (mode roue libre). Comme expliqué précédemment, ce couple constant comporte une composant liée au frottement palier/moyeu et une composante liée au frottement entre le capot 8 et la couronne, le total fournissant un couple C₁.

La figure 24 (cas d'une jupe cylindrique 26 élastique, à savoir notamment selon la figure 13 ou la figure 14) représente l'évolution du couple transmis entre la jante 1 et le moyeu 2, en fonction de l'angle formé entre la jante 1 et le moyeu 2. Encore une fois, l'origine sur l'angle (angle nul) correspond à une position limite entre une sollicitation de l'élément 4 élastiquement déformable et une absence de sollicitation de ce même élément 4.

Si l'on compare la figure 24 à la figure 22, on relève que :
- l'angle R'10 correspond à l'angle R'1 ;
- l'angle R'20 correspond à l'angle R'2, dans la mesure où il s'agit d'une position dans laquelle l'élément élastiquement déformable ne peut plus se déformer.

En revanche, on note sur la figure 24, la présence d'un angle R'30 qui correspond à la mise en contact de l'élément 4 élastiquement déformable avec la jupe cylindrique 36. Entre les angles R'30 et R'20, cela correspond au fonctionnement associé à la déformation élastique de la jupe cylindrique 36 jusqu'à l'angle R'20 qui correspond quant à lui à la mise au contact de la jupe cylindrique 36 avec le moyeu 2, en l'occurrence avec la paroi P1 du moyeu 2.

Dans le fonctionnement décrit précédemment, on a décrit le cas où l'élément élastiquement déformable fonctionne en fermeture pour assurer le passage de couple entre la jante 1 et le moyeu 2.

Bien entendu, le fonctionnement serait similaire si l'élément 4 élastiquement déformable travaillait en ouverture, avec une jupe cylindrique de plus grand diamètre, à savoir une jupe cylindrique 35 (cf. figure 16).

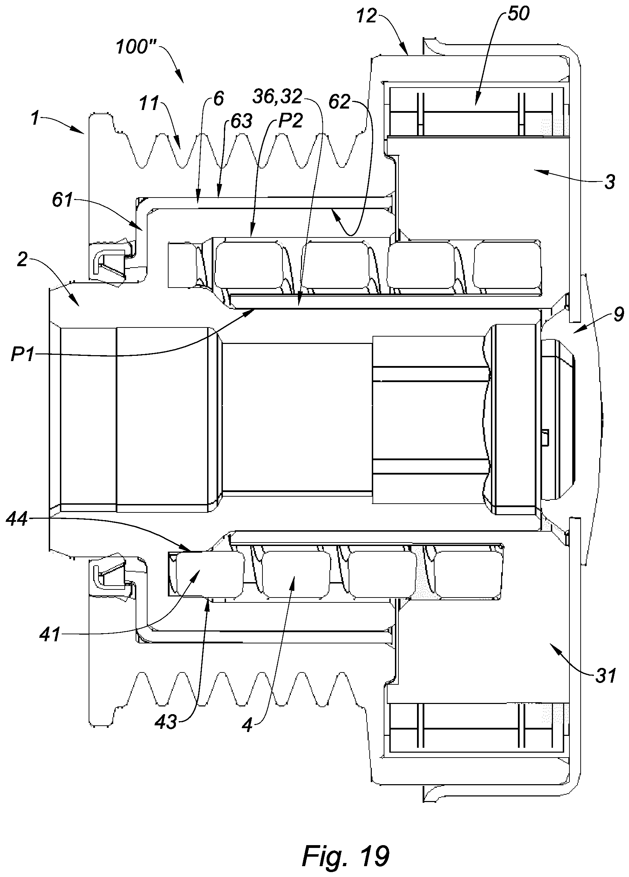

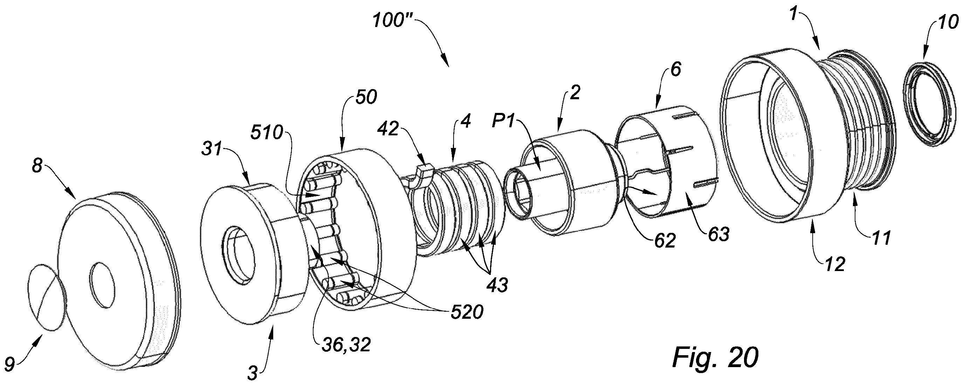

Un troisième mode de réalisation de l'invention est décrit à l'appui des figures 19 et 20.

Par rapport au premier mode de réalisation, la modification porte sur la façon dont s'effectue l'entraînement entre la jante 1 et la couronne 3. Ainsi, dans ce troisième mode de réalisation, la poulie 100" est telle que la jante 1 ne comporte pas de butées internes et la couronne 3', 30', 300' ne comporte pas de butées externes.

Pour cette poulie 100', l'entraînement entre la jante 1 et la couronne s'effectue par l'intermédiaire d'un roue libre unidirectionnelle 50.

Par rapport au deuxième mode de réalisation, la roue libre unidirectionnelle 50 vient en lieu et place de l'embrayage unidirectionnel 5 pour assurer l'entraînement de la couronne 3 par la jante 1.

Plus précisément, la roue libre 50 unidirectionnelle est montée à force dans la deuxième zone 12 de la jante 1, contre la périphérie interne 110 de la jante 1 et d'autre part autour de la première partie 31 de la couronne 3. La paroi interne 510 de la roue libre 50 unidirectionnelle comprend des rouleaux 520 qui permettent, dans un premier sens de rotation relatif entre la jante 1 et la couronne 3, d'assurer l'entraînement de la couronne 3 par la jante 1 (mode couplage) et dans un deuxième sens de rotation relatif entre la jante 1 et le moyeu 2, opposé au premier sens de rotation relatif, de laisser la couronne 3 libre par rapport à la jante 1 (mode roue libre). Là également, la première partie 31 de la couronne est plus rigide que la deuxième partie 32 de cette couronne.

Le résultat est donc le même que celui décrit pour l'embrayage unidirectionnel de la poulie 100' du deuxième mode de réalisation.

Aussi, les courbes de fonctionnement des figures 23 et 24 sont transposables ici au cas de la poulie 100' munie d'une roue libre unidirectionnelle 50.

Enfin, il convient de préciser que si l'on souhaite améliorer la durée de vie de la poulie, il est préférable de mettre en œuvre un élément 4 élastiquement déformable travaillant en fermeture (fatigue) dans le mode couplage. En revanche, ceci est plus compliqué à fabriquer.

Aussi, le choix peut être fait de mettre en œuvre un élément 4 élastiquement déformable travaillant en ouverture dans le mode couplage. Bien que moins performant sur le plan de la fatigue, il est aussi moins coûteux.

Quel que soit le choix effectué sur ce mode de travail, il n'en reste pas moins que l'invention proposée ici améliore, dans les deux cas, la durée de vie de la poulie.

Enfin, quel que soit le mode de réalisation envisagé, la couronne pourra être réalisée, à titre d'exemple en un matériau choisi parmi les matériaux suivants :
- plastiques tels que les polyamide (PA), polyester, polyoxyméthylène (POM), polyétheréthercétone (PEEK), polysulfure de phénylène (PPS) ou des alliages de ceux-ci (lesdits matériaux plastiques pouvant être chargés ou non) ;
- thermoplastiques élastomériques (TPE) ;
- métaux tels qu'aluminium, bronze, laiton, acier et leurs alliages.

## Revendications

1. Poulie (100, 100', 100") de découplage munie d'un axe longitudinal (AX), ladite poulie comportant :
- une jante (1) comprenant une première zone (11), destinée à recevoir une courroie reliant la jante à un premier élément de transmission de puissance, et une deuxième zone (12) située dans le prolongement axial, à savoir selon la direction définie par l'axe longitudinal (AX) de la poulie, de la première zone (11) ;
- un moyeu (2) solidaire d'un deuxième élément de transmission de puissance ; l'un des éléments de transmission de puissance étant menant et l'autre étant mené ; **caractérisé en ce que**
- une couronne (3, 3') comportant une première partie (31) située sous la deuxième zone (12) de la jante et une deuxième partie (32) se présentant sous la forme d'au moins une jupe cylindrique (35, 36), élastique, s'étendant, à partir de la première partie (31), selon ledit axe longitudinal (AX) et comprenant une pluralité de fentes (F1, F2, F3) longitudinales et en conséquence une pluralité de parties (P1, P2, P3) séparées les unes des autres par l'une des fentes, ladite couronne (3) étant apte à tourner par rapport à la jante (1) et au moyeu (2) autour dudit axe longitudinal (AX) ;
- des moyens (5 ; 50 ; 13, 14, 33, 34) pour assurer l'entraînement de la couronne (3) par rapport à la jante (1) ;
- un élément élastiquement déformable (4) dont une première extrémité (41) est fixée au moyeu (2) et dont une deuxième extrémité (42) est fixée à la couronne (3) ;
ladite au moins une jupe cylindrique (35, 36) étant par ailleurs située en vis-à-vis de l'élément élastiquement déformable (4), de sorte que l'élément élastiquement déformable (4) puisse venir au contact de ladite au moins une jupe cylindrique (35, 36).

2. Poulie (100, 100', 100") selon la revendication précédente, dans laquelle au moins une fente (F1, F2, F3) de ladite pluralité de fentes présente une largeur, mesurée sur une circonférence de ladite au moins une jupe cylindrique (35, 36), strictement inférieure à une largeur d'au moins une partie (P1, P2, P3) de la jupe cylindrique (35, 36).

3. Poulie (100, 100', 100") selon l'une des revendications précédentes, dans laquelle au moins fente (F1, F2, F3) de ladite pluralité de fentes présente une largeur, mesurée sur la circonférence de ladite au moins une jupe cylindrique (35, 36), supérieure ou égale à une largeur d'au moins une partie (P1, P2, P3) de la jupe cylindrique (35, 36).

4. Poulie (100, 100', 100") selon l'une des revendications précédentes, dans laquelle la couronne (3, 3') est réalisée en un matériau choisi parmi les plastiques tels que les polyamide (PA), polyester, polyoxyméthylène (POM), polyétheréthercétone (PEEK), polysulfure de phénylène (PPS) ou des alliages de ceux-ci ou les thermoplastiques élastomères (TPE).

5. Poulie (100, 100', 100") selon l'une des revendications précédentes, dans laquelle la deuxième partie (32) de la couronne (3, 3') se présente sous la forme de deux jupes cylindriques (35, 36) concentriques, l'élément élastiquement déformable (4) étant situé entre les deux jupes cylindriques.

6. Poulie (100) selon l'une des revendications précédentes, dans laquelle les moyens (13, 14, 33, 34) pour assurer, dans un premier sens de rotation relatif entre la jante (1) et le moyeu (2), l'entraînement de la couronne (3) par la jante (1) comportent :
- au moins une butée (13, 14) située sur la périphérie interne (110) de la jante (1), au niveau de la deuxième zone (12) ;
- au moins une butée (33, 34) située sur la périphérie externe (330) de la couronne (3, 3'), au niveau de la première partie (31).

7. Poulie (100) selon la revendication précédente, dans laquelle :
- la périphérie interne de la jante (1) comprend au moins une deuxième butée (14) ; et
- la périphérie externe de la couronne (3) comporte au moins une deuxième butée (34).

8. Poulie (100') selon l'une des revendications 1 à 5, dans laquelle les moyens (5) pour assurer, dans un premier sens de rotation relatif entre la jante (1) et le moyeu (2), l'entraînement de la couronne (3) par la jante (1) comportent un embrayage unidirectionnel (5), par exemple un ressort de torsion, dont une extrémité (51) est fixée à la couronne (3) et dont la partie restante (52) est montée à la fois sous la deuxième zone (12) de la jante (1) et autour de la couronne (3).

9. Poulie (100") selon l'une des revendications 1 à 5, dans laquelle les moyens (5) pour assurer, dans un premier sens de rotation relatif entre la jante (1) et le moyeu (2), l'entraînement de la couronne (3) par la jante (1) comportent une roue libre (50) unidirectionnelle montée d'une part, à force avec la deuxième zone (12) de la jante (1) et d'autre part, autour de la première partie (31) de la couronne (3).

10. Poulie (100, 100', 100") selon l'une des revendications précédentes, comportant au moins un palier (6) situé entre la jante (1) et le moyeu (2).

11. Poulie (100, 100', 100") selon la revendication précédente, dans laquelle ledit au moins un palier (6) comporte une face (61) s'étendant radialement et en contact avec le moyeu (2).

12. Poulie (100, 100', 100") selon l'une des revendications 10 ou 11, dans laquelle ledit au moins un palier (6) est réalisé soit en un matériau plastique choisi parmi le polyétheréthercétone (PEEK), le poly(téréphtalate d'éthylène) (PET), le polyamide (PA) chargé en disulfure de molybdène (MoS₂), le polyamide (PA) chargé en polytétrafluoroéthylène (PTFE) ou le polyoxyméthylène (POM) soit avec une couche interne métallique ou en alliage métallique, recouverte par une couche externe chargée de polytétrafluoroéthylène (PTFE).

13. Poulie (100, 100', 100") selon l'une des revendications précédentes, dans laquelle il est prévu un capot (8) monté fixement sur la jante (1) et de préférence, au contact de la couronne (3, 3').

14. Poulie (100, 100', 100") selon l'une des revendications précédentes, dans laquelle la première partie (31) de la couronne est plus rigide que la deuxième partie (32) de la cette couronne.

## Patentansprüche

1. Entkoppelungsriemenscheibe (100, 100', 100"), die mit einer Längsachse (AX) versehen ist, wobei die Riemenscheibe umfasst:
- eine Felge (1), die eine erste Zone (11) umfasst, die dazu bestimmt ist, einen Riemen aufzunehmen, der die Felge mit einem ersten Leistungsübertragungselement verbindet, und eine zweite Zone (12), die in der axialen Verlängerung, nämlich entlang der von der Längsachse (AX) der Riemenscheibe definierten Richtung, der ersten Zone (11) liegt;
- eine Nabe (2), die fest mit einem zweiten Leistungsübertragungselement verbunden ist; wobei das eine der Leistungsübertragungselemente antreibend und das andere Element abgetrieben ist; **dadurch gekennzeichnet, dass**
- ein Kranz (3, 3'), der einen ersten Teil (31) umfasst, unter der zweiten Zone (12) der Felge liegt, und einen zweiten Teil (32), der die Form mindestens einer elastischen zylindrischen Schürze (35, 36) aufweist, die sich ausgehend von dem ersten Teil (31) entlang der Längsachse (AX) erstreckt und eine Vielzahl von Längsschlitzen (F1, F2, F3) umfasst und folglich eine Vielzahl von Teilen (P1, P2, P3), die voneinander durch den einen der Schlitze getrennt sind, wobei der Kranz (3) dazu geeignet ist, in Bezug auf die Felge (1) und die Nabe (2) um die Längsachse (AX) zu drehen;
- Mittel (5; 50; 13, 14, 33, 34) zum Sicherstellen des Antriebs des Kranzes (3) in Bezug auf die Felge (1);
- ein elastisch verformbares Element (4), von dem ein erstes Ende (41) an der Nabe (2) befestigt ist, und von dem ein zweites Ende (42) an dem Kranz (3) befestigt ist;
wobei die mindestens eine zylindrische Schürze (35, 36) außerdem gegenüber dem elastisch verformbaren Element (4) derart liegt, dass das elastisch verformbare Element (4) mit der mindestens einen zylindrischen Schürze (35, 36) in Kontakt kommen kann.

2. Riemenscheibe (100, 100', 100") nach dem vorstehenden Anspruch, wobei mindestens ein Schlitz (F1, F2, F3) der Vielzahl von Schlitzen eine Breite, gemessen auf einem Umfang der mindestens einen zylindrischen Schürze (35, 36), aufweist, die strikt kleiner ist als eine Breite mindestens eines Teils (P1, P2, P3) der zylindrischen Schürze (35, 36).

3. Riemenscheibe (100, 100', 100") nach einem der vorstehenden Ansprüche, wobei mindestens ein Schlitz (F1, F2, F3) der Vielzahl von Schlitzen eine Breite, gemessen auf dem Umfang der mindestens einen zylindrischen Schürze (35, 36), aufweist, die größer oder gleich einer Breite mindestens eines Teils (P1, P2, P3) der zylindrischen Schürze (35, 36) ist.

4. Riemenscheibe (100, 100', 100") nach einem der vorstehenden Ansprüche, wobei der Kranz (3, 3') aus einem Material hergestellt ist, das aus den Kunststoffen ausgewählt ist, wie aus dem Polyamid (PA), Polyester, Polyoximethylen (POM), Polyetheretherketon (PEEK), Polyphenylensulfid (PPS) oder aus den Legierungen dieser oder aus den thermoplastischen Elastomeren (TPE).

5. Riemenscheibe (100, 100', 100") nach einem der vorstehenden Ansprüche, wobei der zweite Teil (32) des Kranzes (3, 3') die Form zweier konzentrischer zylindrischer Schürzen (35, 36) aufweist, wobei das elastisch verformbare Element (4) zwischen den zwei zylindrischer Schürzen liegt.

6. Riemenscheibe (100) nach einem der vorstehenden Ansprüche, wobei die Mittel (13, 14, 33, 34) zum Sicherstellen des Antriebs des Kranzes (3) durch die Felge (1) in eine erste relative Rotationsrichtung zwischen der Felge (1) und der Nabe (2) umfassen:
- mindestens einen Anschlag (13, 14), der auf dem Innenumfang (110) der Felge (1) in dem Bereich der zweiten Zone (12) liegt;
- mindestens einen Anschlag (33, 34), der auf dem Außenumfang (330) des Kranzes (3, 3') in dem Bereich des ersten Teils (31) liegt.

7. Riemenscheibe (100) nach dem vorstehenden Anspruch, wobei:
- der Innenumfang der Felge (1) mindestens einen zweiten Anschlag (14) umfasst; und
- der Außenumfang des Kranzes (3) mindestens einen zweiten Anschlag (34) umfasst.

8. Riemenscheibe (100') nach einem der Ansprüche 1 bis 5, wobei die Mittel (5) zum Sicherstellen des Antriebs des Kranzes (3) durch die Felge (1) in eine erste relative Rotationsrichtung zwischen der Felge (1) und der Nabe (2) eine einseitig gerichtete Kupplung (5) umfassen, zum Beispiel eine Torsionsfeder, von der ein Ende (51) an dem Kranz (3) befestigt ist und von der der restliche Teil (52) sowohl unter der zweiten Zone (12) der Felge (1) als auch um den Kranz (3) montiert ist.

9. Riemenscheibe (100") nach einem der Ansprüche 1 bis 5, wobei die Mittel (5) zum Sicherstellen des Antriebs des Kranzes (3) durch die Felge (1) in eine erste relative Rotationsrichtung zwischen der Felge (1) und der Nabe (2) ein freies einseitig gerichtetes Rad (50) umfassen, das einerseits kraftschlüssig mit der zweiten Zone (12) der Felge (1) und andererseits um den ersten Teil (31) des Kranzes (3) montiert ist.

10. Riemenscheibe (100, 100', 100") nach einem der vorstehenden Ansprüche, die mindestens ein Lager (6) umfasst, das zwischen der Felge (1) und der Nabe (2) liegt.

11. Riemenscheibe 100 nach dem vorstehenden Anspruch, wobei das mindestens eine Lager (6) eine Fläche (61) umfasst, die sich radial und in Kontakt mit der Nabe (2) erstreckt.

12. Riemenscheibe (100, 100', 100") nach einem der Ansprüche 10 oder 11, wobei das mindestens eine Lager (6) entweder aus einem Kunststoff hergestellt ist, der ausgewählt ist aus Polyetheretherketon (PEEK), Poly(ethylenterephthalat) (PET), Polyamid (PA) mit Molybdändisulfidfüllung (MoS₂), Polyamid (PA) mit Polytetrafluorethylenfüllung (PTFE) oder Polyoximethylen (POM), oder mit einer metallischen Innenschicht oder aus Metalllegierung, die von einer mit Polytetrafluorethylen (PTFE) gefüllten Außenschicht bedeckt ist.

13. Riemenscheibe (100, 100', 100") nach einem der vorstehenden Ansprüche, in der eine Haube (8) vorgesehen ist, die fest auf der Felge (1) und vorzugsweise in Kontakt mit dem Kranz (3, 3') montiert ist.

14. Riemenscheibe (100, 100', 100") nach einem der vorstehenden Ansprüche, wobei der erste Teil (31) des Kranzes starrer ist als der zweite Teil (32) dieses Kranzes.

## Claims

1. An uncoupling pulley (100, 100', 100") provided with a longitudinal axis (AX), said pulley including:
- a wheel rim (1) comprising a first area (11), intended for receiving a belt connecting the wheel rim to a first power-transmission element, and a second area (12) located in the axial extension, namely in the direction defined by the longitudinal axis (AX) of the pulley, of the first area (11);
- a hub (2) rigidly connected to a second power-transmission element; one of the power-transmission elements being driving and the other being driven;
**characterized in that**:
- a ring gear (3, 3') including a first portion (31) located under the second area (12) of the wheel rim and a second portion (32) presented in the shape of at least one cylindrical skirt (35, 36), resilient, extending, from the first portion (31), along said longitudinal axis (AX) and including a plurality of longitudinal slots (F1, F2, F3) and consequently a plurality of portions (P1, P2, P3) separated from each other by one of the slots, said ring gear (3) being capable of rotating relative to the wheel rim (1) and the hub (2) about said longitudinal axis (AX);
- means (5; 50; 13, 14, 33, 34) for driving the ring gear (3) relative to the wheel rim (1);
- a resiliently deformable element (4), a first end (41) of which is fixed to the hub (2) and a second end (42) of which is fixed to the ring gear (3);
said at least one cylindrical skirt (35, 36) being moreover located opposite the resiliently deformable element (4), so that the resiliently deformable element (4) can contact said at least one cylindrical skirt (35, 36).

2. The pulley (100, 100', 100") according to the preceding claim, wherein at least one slot (F1, F2, F3) of said plurality of slots has a width, measured on a circumference of said at least one cylindrical skirt (35, 36), strictly lower than a width of at least one portion (P1, P2, P3) of the cylindrical skirt (35, 36).

3. The pulley (100, 100', 100") according to one of the preceding claims, wherein at least one slot (F1, F2, F3) of said plurality of slots has a width, measured on the circumference of said at least one cylindrical skirt (35, 36), greater than or equal to a width of at least one portion (P1, P2, P3) of the cylindrical skirt (35, 36).

4. The pulley (100, 100', 100") according to one of the preceding claims, wherein the ring gear (3, 3') is made of a material selected from plastics such as polyamide (PA), polyester, polyoxymethylene (POM), polyether ether ketone (PEEK), polyphenylene sulfide (PPS) or alloys thereof or thermoplastic elastomers (TPE).

5. The pulley (100, 100', 100") according to one of the preceding claims, wherein the second portion (32) of the ring gear(3, 3') is in the form of two concentric cylindrical skirts (35, 36), the resiliently deformable element (4) being located between the two cylindrical skirts.

6. The pulley (100) according to one of the preceding claims, wherein the means (13, 14, 33, 34) for ensuring, in a first relative rotation direction between the wheel rim (1) and the hub (2), the drive of the ring gear (3) by the wheel rim (1) include :
- at least one stop (13, 14) located on the inner periphery (110) of the wheel rim (1), at the level of the second area (12);
- at least one stop (33, 34) located on the outer periphery (330) of the ring gear (3, 3'), at the level of the first portion (31).

7. The pulley (100) according to the preceding claim, wherein
- the inner periphery of the wheel rim (1) includes at least one second stop (14); and
- the outer periphery of the ring gear (3) includes at least one second stop (34).

8. The pulley (100') according to one of claims 1 to 5, wherein means (5) for ensuring, in a first relative rotation direction between the wheel rim (1) and the hub (2), the drive of the ring gear(3) by the wheel rim (1) include an unidirectional clutch (5), for example a torsion spring, an end (51) of which is fixed to the ring gear (3) and the remaining portion (52) of which is mounted both under the second area (12) of the wheel rim (1) and around the ring gear (3).

9. The pulley (100") according to one of claims 1 to 5, wherein the means (5) for ensuring, in a first relative rotation direction between the wheel rim (1) and the hub (2), the drive of the ringgear(3) by the wheel rim (1) include an unidirectional freewheel (50) mounted on one hand, by force with the second area (12) of the wheel rim (1) and on the other hand, around the first portion (31) of the ring gear (3).

10. The pulley (100, 100', 100") according to one of the preceding claims, including at least one bearing (6) located between the wheel rim (1) and the hub (2).

11. The pulley (100, 100', 100") according to the preceding claim, wherein said at least one bearing (6) includes a radially extending face (61) in contact with the hub (2).

12. The pulley (100, 100', 100") according to one of claims 10 or 11, wherein said at least one bearing (6) is made of either a plastic material selected from polyether ether ketone (PEEK), polyethylene terephthalate (PET), polyamide (PA) loaded with molybdenum disulfide (MoS₂), polyamide (PA) loaded with polytetrafluoroethylene (PTFE) or polyoxymethylene (POM) or a metallic or metallic alloy inner layer, covered by a polytetrafluoroethylene (PTFE) loaded outer layer.

13. The pulley (100, 100', 100', 100") according to one of the preceding claims, in which a cover (8) is provided, fixedly mounted on the wheel rim (1) and preferably in contact with the ring gear (3, 3').

14. The pulley (100, 100', 100") according to one of the preceding claims, in which the first portion (31) of the ring gear is more rigid than the second portion (32) of the ring gear.
